Europäisches Patentamt

European Patent Office

Office européen des brevets

(19)

(11) Veröffentlichungsnummer: **0 273 197**
**A1**

(12) # EUROPÄISCHE PATENTANMELDUNG

(21) Anmeldenummer: **87117352.2**

(22) Anmeldetag: **25.11.87**

(51) Int. Cl.⁴: **A01N 25/34** , A01N 25/18

(30) Priorität: **29.11.86 DE 3640880**

(43) Veröffentlichungstag der Anmeldung:
**06.07.88 Patentblatt 88/27**

(84) Benannte Vertragsstaaten:
**AT BE CH DE ES FR GB GR IT LI NL**

(71) Anmelder: **BASF Aktiengesellschaft
Carl-Bosch-Strasse 38
D-6700 Ludwigshafen(DE)**

(72) Erfinder: **Mertens, Rolf
Bockenheimer Strasse 6
D-6700 Ludwigshafen(DE)**
Erfinder: **Seufert, Walter, Dr.
Laerchenweg 19
D-6720 Speyer(DE)**
Erfinder: **Angerer, Winfried, Dr.
Schwarzwaldstrasse 69
D-6800 Mannheim 1(DE)**
Erfinder: **Becker, Rainer, Dr.
Im Haseneck 22
D-6702 Bad Duerkheim(DE)**
Erfinder: **Lohrbaecher, Volker
Kisslichstrasse 1
D-6940 Weinheim(DE)**

(54) **Kunststoffampullen als Pheromondispenser.**

(57) Verfahren zur Abgabe von Pheromonen der Klasse der Sexuallockstoffe an eine Umgebung, dadurch gekennzeichnet, daß die Pheromone aus Kunststoffbehältern mit einem Volumen von 0,01 bis 2,00 ml, vorzugsweise von 0,5 bis 1,5 ml, und Behälterwandstärken von 0,1 bis 1,0 mm, vorzugsweise 0,2 bis 0,6 mm, abgegeben werden, und die Behälterkunststoffe Polyethylen, Polypropylen, Polyamid oder Polyester sind.

EP 0 273 197 A1

## Kunststoffampullen als Pheromondispenser

Die vorliegende Erfindung betrifft ein Verfahren bzw. ein Mittel zur Abgabe von Pheromonen der Klasse der Sexuallockstoffe an eine Umgebung.

Um einer möglichen Resistenz verschiedener Schadinsekten gegenüber insektiziden Wirkstoffen vorzubeugen sowie den Einsatz dieser Stoffe mengenmäßig zu begrenzen, nutzt man neuerdings im Pflanzenschutz die Möglichkeit, das Verhalten bestimmter Insektenarten durch Pheromone spezifisch zu manipulieren. Mittels der sogenannten "Monitortechnik" werden für einzelne Insektenarten charakteristische Werte wie Flugmaximum und Populationsdichte erfaßt, wodurch Zeitpunkt und Menge des auszubringenden Wirkstoffs festgelegt werden können. Die Anwendung von Pheromonen nach der sog. "Verwirrungsmethode" ermöglicht dann eine großflächige Bekämpfung bestimmter Schadinsekten ohne Einsatz von Insektiziden. Hierzu werden größere Mengen eines artspezifisch wirkenden Pheromons ausgebracht. Durch dieses Überangebot an Pheromon werden die männlichen Insekten derart verwirrt und desorientiert, daß das Auffinden des Weibchens und damit die Fortpflanzung unterbleibt. Speziell bei der Anwendung von Pheromonen im Wein-und Obstanbau wird die Möglichkeit einer punktuellen Ausbringung von wirkstoffhaltigen Großdispensern genutzt. Hierdurch wird das Pheromon gegenüber der Luftapplikation (uniforme Duftwolke) an "wenigen" Stellen konzentriert (Punktquellen), wodurch längere Wirkzeiten resultieren.

Zur Anwendung kommen hier z.B. dreischichtige, mit Pheromon imprägnierte Weich-PVC-Folien (DE-OS 27 40 497), die innerhalb von ca. 6 Wochen bis zu 80 % des Wirkstoffes abdampfen. Dabei kommt es anfänglich zu einer überhöhten Freisetzungsgeschwindigkeit und damit Überdosierung des Wirkstoffes. Eine kontrollierte Bekämpfung von Schadinsekten durch diese als "Matrixsysteme" zu bezeichnenden Abgabevorrichtungen ist somit nicht möglich.

Eine andere Art von Abgabevorrichtung setzt sich aus einem flexiblen Rohrkörper aus einem polymeren Material, vorzugsweise einem Polyethylen hoher Dichte zusammen, wobei die Bohrung des Rohrkörpers mit dem Wirkstoff gefüllt ist (EP 0 061 192 und EP 0 160 151). Bei einer vorgegebenen Länge der Abdampfkörper von ca. 20 cm steht jedoch nur ein begrenzter Hohlraum zur Aufnahme des Wirkstoffes zur Verfügung, womit die Wirkungsdauer dieser Verdampfungskörper auf eine zu kurze Zeit beschränkt ist. Gefordert sind vielmehr Abgabevorrichtungen, mit denen mehrere Generationen von Schadinsekten erfaßt werden, also für Wirkzeiten von mindestens 6 Monaten und mehr. Auch ist zum Ausbringen der bekannten Abgabevorrichtungen ein vielfaches an Mehrarbeit notwendig, da sie umständlich mit beiden Händen an Zweigen oder Ästen verknotet werden müssen. Dies hat zur Folge, daß nach Abgabe des Wirkstoffes an die Umgebung die leeren Kunststoffgebinde kaum wieder eingesammelt werden und damit eine zunehmende Umweltbelastung erfolgt.

Es war daher die Aufgabe der vorliegnden Erfindung, unter Verwendung einfach auszubringender Verdampfungskörper die langsame und kontinuierliche (lineare) Freisetzung von artspezifisch wirkenden Sexuallockstoffen über einen Zeitraum von mindestens 6 Monaten zu garantieren, wodurch eine Bekömpfung von Schadschmetterlingen im Wein-und Obstanbau möglich wird.

Diese Aufgabe wird durch die Merkmale der Patentansprüche 1 bis 4 gelöst.

Es wurde somit gefunden, daß für Sexuallockstoffe eine gleichmäßige Lockstoffabgabe mittels Behältnissen aus thermoplastischen Kunststoffen, hergestellt im Blasformen, Doppelstreckziehen oder Thermoformen, erreicht werden kann. Die im Anspruch angeführten Thermoplaste, dazu zählen auch Ethylen-Copolymerisate mit Propylen, Vinylacetat und Acrylsäure(derivaten) sowie biologisch abbaubare Thermoplaste, wie z.B. Polyhydroxybuttersäure bzw. deren Copolymerisate mit Hydroxyvaleriansäure, sind infolge ihrer Permeabilität, wie gefunden wurde, zur Erzielung einer gleichmäßigen Wirkstoffabgabe bestens geeignet. Infolge der guten Permeabilität tritt bei diesen thermoplastischen Kunststoffen in dem den Lockstoff aufnehmenden Behälter kein Unterdruck auf, da die Gase der Luft auch von außen nach innen durch die Wand des Behälters diffundieren. Wie gefunden wurde, kann die Permeationsrate in Abhängigkeit vom Sexuallockstoff über die Zusammensetzung und Dichte des Kunststoffes sowie über die Wanddicke des Behälters (Dispenser) eingestellt werden. Die den Lockstoff aufnehmenden Behälter (Dispenser) sollten gemäß den Untersuchungen Wanddicken von 0,1 bis 1 mm, vorzugsweise jedoch Wanddicken von 0,2 bis 0,6 mm aufweisen. Beim gleichen Material wird bei einer Wanddicke von 0,1 mm eine hohe Permeationsrate und bei einer Wanddicke von 1 mm eine geringere Permeationsrate festgestellt. Um eine Lichtschädigung des Lockstoffes zu vermeiden, können die Behälter (Dispenser) deckend eingefärbt sein. Die Einfärbung kann gleichzeitig zur Kennzeichnung des Lockstoffes bei Ausbringung von verschiedenen Lockstoffen dienen. Durch eine mitgeformte Prägung auf dem Behälter kann das Ausbringungsjahr gekennzeichnet werden. Die Behälter (Dispenser) werden bei der Herstellung nach dem Blasformen, Doppelstreckziehen oder Thermoformen gleichzeitig mit einer Befestigungseinrichtung ausgestattet, die ein einfaches und schnelles Anbringen der Abgabevorrichtung an einem Zweig oder Ast mit einer Hand ermöglicht.

Im Falle eines Aufreihens der Behälter (Dispenser) auf eine Schnur und eines Plazierens in Abständen von 0.5 bis 10 m wird eine Applikation möglich, die erstens zeit-und arbeitsersparend ist (keine mühevolle Einzelapplikation), zweitens die Anwendung einer hohen Punktquellenzahl (10,000 Dispensern und mehr pro Hektar) ermöglicht und drittens ein einfaches Einsammeln der verbrauchten Behälter ermöglicht, was dem zunehmenden Umweltbewußtsein entgegenkommt.

Die Verwendung von Behältnissen (Dispensern) mit einem Zwei-oder Mehrkammersystem ermöglicht zudem die gleichzeitige Bekämpfung verschiedener Schadinsekten ohne zusätzlichen Arbeitsaufwand, jedoch die Reduzierung des Materialaufwandes auf die Hälfte oder weniger.

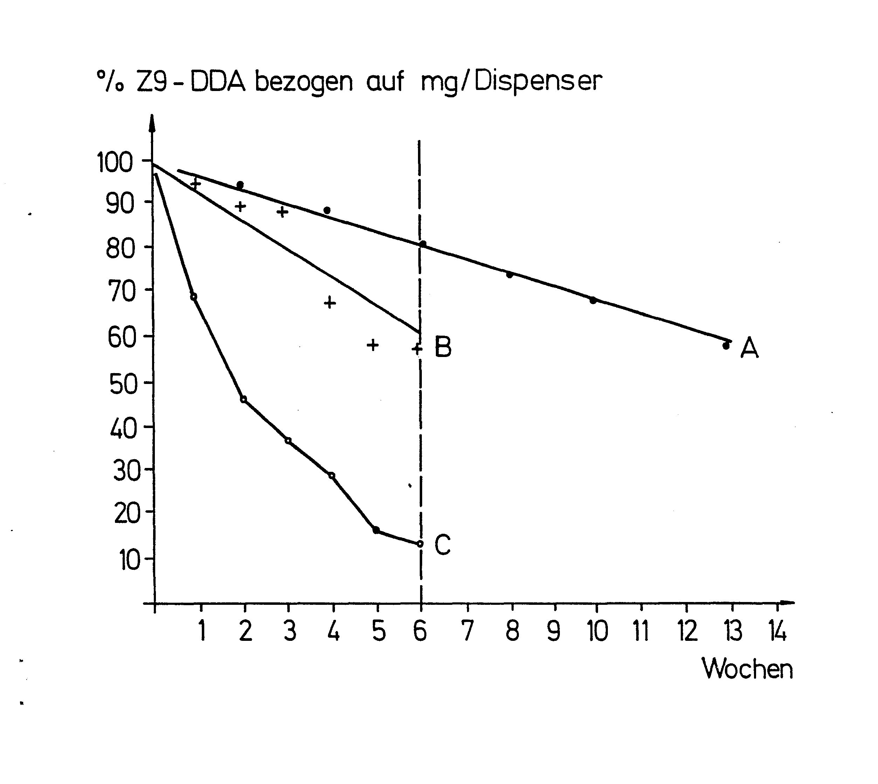

Beispiel 1 (Figur 1)

Vergleich des Abdampfverhaltens von Z9-Dodecenylacetat (Z9-DDA) gemäß dem erfindungsgemäßen Abgabeverfahren mit Abgabesystemen des Standes der Technik.

Hierbei zeigt die Kurve A das Abdampfverhalten gemäß dem erfindungsgemäßen Verfahren, während die Kurve B das Abdampfverhalten eines flexiblen Hohlkörpers zeigt, dessen Bohrung mit Wirkstoff gefüllt ist, und die Kurve C das eines laminaten Systems.

Obgleich die Abdampfraten der Proben A und B praktisch identisch sind (ca. 1,5 mg pro Tag und Dispenser), sind nach dem erfindungsgemäßen Verfahren nach gleicher Zeit (6 Wochen) erst 20 % des Wirkstoffes gegenüber 45 % bei Probe B verbraucht. Das laminate System (Probe C) gibt während der 6 Wochen ca. 80 % seines Wirkstoffanteils ab, obgleich hier die Abgaberate mit ca. 0,8 mg pro Tag und Dispenser auf die Hälfte reduziert ist.

Die nachfolgenden Beispiele 2 bis 5 demonstrieren das für Reservoir-Systeme charakteristische konstante Abdampfverhalten:

Beispiel 2

Pheromon Z9-Dodecenylacetat, abgedampft werden 15 Proben a 300 mg (100 %) unter Laborbedingungen (21-22 °C, Windgeschw. 0,85-0,95 m/sek), proz. Restwert und durchschn. Abgaberate.

a) Polyethylen der Dichte C, Wandstärke 0,26 mm

| Zeit (Wochen) | Restwert (%) | durchsch. Abgaberate (mg/dxAmpulle) |
|---|---|---|
| 0 | 100 | -,- |
| 3 | 81 | 2,8 |
| 6 | 57 | 3,1 |
| 9 | 32 | 3,2 |
| 12 | 13 | 3,1 |
| 15 | 8 | 3,1 |
| 18 | 7 | 2,7 |

b) Polyethylen der Dichte C, Wandstärke 0,35 mm

| Zeit (Wochen) | Restwert (%) | durchsch. Abgaberate (mg/dxAmpulle) |
|---|---|---|
| 0 | 100 | -,- |
| 3 | 87 | 1,9 |
| 6 | 72 | 2,0 |
| 9 | 55 | 2,2 |
| 12 | 41 | 2,1 |
| 15 | 29 | 2,1 |
| 18 | 20 | 1,9 |

c) Polyethylen der Dichte C, Wandstärke 0,50 mm

| Zeit (Wochen) | Restwert (%) | durchsch. Abgaberate (mg/dxAmpulle) |
|---|---|---|
| 0 | 100 | -,- |
| 3 | 93 | 0,9 |
| 6 | 80 | 1,5 |
| 9 | 68 | 1,5 |
| 12 | 58 | 1,5 |
| 15 | 46 | 1,5 |
| 18 | 41 | 1,4 |

d) Polyethylen der Dichte D, Wandstärke 0,26 mm

| Zeit (Wochen) | Restwert (%) | durchsch. Abgaberate (mg/dxAmpulle) |
|---|---|---|
| 0 | 100 | -,- |
| 3 | 88 | 1,6 |
| 6 | 71 | 2,0 |
| 9 | 54 | 2,1 |
| 12 | 31 | 2,4 |
| 15 | 14 | 2,4 |
| 18 | 5 | 2,2 |

Beispiel 3

Pheromon 7Z, 11E/Z-Hexadecadienylacetat (Gossyplure), abgedampft werden zwei Proben unter Laborbedingungen, Polyethylen der Dichte A, Wandstärke 0,35 mm:

| Zeit (Wochen) | Probe 1 g | % | Probe 2 g | % |
|---|---|---|---|---|
| 0 | 1,3043 | 100 | 0,7214 | 100 |
| 3 | 1,3043 | 100 | 0,7214 | 100 |
| 6 | 1,3043 | 100 | 0,7214 | 100 |
| 9 | 1,2995 | 99 | 0,7204 | 100 |
| 12 | 1,2821 | 98 | 0,6942 | 96 |
| 15 | 1,2011 | 92 | 0,6921 | 96 |
| 18 | 1,1943 | 92 | 0,6679 | 92 |
| 21 | 1,1909 | 91 | 0,6541 | 91 |
| 24 | 1,1923 | 91 | 0,6291 | 87 |
| 27 | 1,2078 | 93 | 0,6232 | 86 |
| Durchschn. | 0,5 | | 0,5 mg/dxAmpulle | |

Beispiel 4

Pheromon Z9/Z11-(9:1)-Tetradecenylacetat (Fruchtschalenwickler), abgedampft werden zwei Proben unter Laborbedingungen, Polyethylen der Dichte A, Wandstärke 0,35 mm:

| Zeit | Probe 1 | | Probe 2 | |
|------|------|----|------|----|
| (Wochen) | g | % | g | % |
| 0 | 1,3532 | 100 | 1,2144 | 100 |
| 3 | 1,3449 | 99 | 1,2024 | 99 |
| 6 | 1,3293 | 98 | 1,1849 | 98 |
| 9 | 1,3047 | 96 | 1,1634 | 96 |
| 12 | 1,2853 | 95 | 1,1496 | 94 |
| 15 | 1,2684 | 94 | 1,1331 | 93 |
| 18 | 1,2548 | 93 | 1,1021 | 91 |
| 21 | 1,2148 | 90 | 1,0305 | 85 |
| 24 | 1,1123 | 86 | 0,8880 | 73 |
| Durchschn. | 1,4 | | 1,9 mg/dxAmpulle | |

Beispiel 5

Pheromon 1,7-Dioxaspiro-[5,5]-undecan (Olivenfliege), abgedampft werden zwei Proben unter Laborbedingungen, Polyethylen der Dichte D, Wandstärke 0,50 mm:

| Zeit | Probe 1 | | Probe 2 | |
|------|------|----|------|----|
| (Wochen) | g | % | g | % |
| 0 | 1,0594 | 100 | 1,4379 | 100 |
| 3 | 0,8050 | 76 | 1,3138 | 91 |
| 5 | 0,7354 | 69 | ------ | -- |
| 7 | 0,6556 | 62 | 1,2533 | 87 |
| 10 | 0,6542 | 53 | 1,0290 | 72 |
| 13 | 0,4511 | 43 | 0,9102 | 63 |
| 16 | 0,3468 | 33 | 0,9713 | 55 |
| 19 | 0,2384 | 22 | 0,6665 | 46 |
| 21 | 0,1472 | 14 | 0,5622 | 39 |
| 24 | 0,0368 | 3 | 0,4461 | 31 |
| Durchschn. | 6,1 | | 5,9 mg/dxAmpulle | |

**Ansprüche**

1. Verfahren zur Abgabe von Pheromonen der Klasse der Sexuallockstoffe an eine Umgebung, dadurch gekennzeichnet, daß die Pheromone aus Kunststoffbehältern mit einem Volumen von 0,01 bis 2,00 ml, vorzugsweise von 0,5 bis 1,5 ml, und Behälterwandstärken von 0,1 bis 1,0 mm, vorzugsweise 0,2 bis 0,6 mm, abgegeben werden, und die Behälterkunststoffe Polyethylen, Polypropylen, Polyamid oder Polyester sind.

2. Verfahren gemäß Anspruch 1, dadurch gekennzeichnet, daß die Kunststoffbehälter mit einer Aufhängevorrichtung versehen sind.

3.Verfahren gemäß Anspruch 1 und 2, dadurch gekennzeichnet, daß die Kunststoffbehälter als Zwei- oder Mehrkammersystem zur Bekämpfung verschiedener, jedoch gleichzeitig auftretender Schadinsekten für die gleichzeitige Abgabe von zwei oder mehreren artspezifisch wirkenden Sexuallockstoffen ausgebildet sind.

4. Verfahren gemäß Anspruch 1 bis 3, dadurch gekennzeichnet, daß die Kunststoffbehälter auf einer Schnur aufgereiht und in Abständen von 0,5 bis 10 m plaziert sind.

% Z9-DDA bezogen auf mg/Dispenser

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | EP-A-0 160 151 (SHIN-ETSU CHEMICAL CO. LTD) * Seite 8, Zeile 12 - Seite 10, Zeile 18; Beispiele; Ansprüche * --- | 1,2 | A 01 N 25/34 A 01 N 25/18 |
| D,X | EP-A-0 061 192 (SHIN-ETSU CHEMICAL CO. LTD) * Seite 6, Zeile 17 - Seite 9, Zeile 10; Seite 14, Zeile 23 - Seite 15, Zeile 14; Beispiele; Seite 24, Zeilen 2-15; Ansprüche * --- | 1-3 | |
| A | GB-A-1 555 554 (ALBANY INTERNATIONAL) * Seite 7, Zeile 69 - Seite 8, Zeile 57 * ---- | 1 | |
| A | EP-A-0 168 862 (NEDERLANDSE CENTRALE ORGANISATIE VOOR T.N.O.) * Seite 4, Zeilen 7-27; Seite 5, Zeilen 17-28; Ansprüche 1-5 * ----- | 1 | |

| | | | RECHERCHIERTE SACHGEBIETE (Int. Cl.4) A 01 N |

Der vorliegende Recherchenbericht wurde für alle Patentansprüche erstellt

| Recherchenort | Abschlußdatum der Recherche | Prüfer |
|---|---|---|
| DEN HAAG | 07-03-1988 | FLETCHER A.S. |